Europäisches Patentamt

European Patent Office

Office européen des brevets

(19)

(11) Publication number: **0 154 479**
**B1**

## EUROPEAN PATENT SPECIFICATION

(12)

(45) Date of publication of patent specification: **29.06.88**

(21) Application number: **85301244.1**

(22) Date of filing: **25.02.85**

(51) Int. Cl.⁴: **C 09 J 3/14, C 08 L 33/08,
B 22 F 1/00**

(54) Acrylic polymer composition for bonding metal powders.

(30) Priority: **24.02.84 JP 34886/84**

(43) Date of publication of application:
**11.09.85 Bulletin 85/37**

(45) Publication of the grant of the patent:
**29.06.88 Bulletin 88/26**

(84) Designated Contracting States:
**DE FR GB**

(56) References cited:
**GB-A-1 548 226**

(73) Proprietor: **NITTO ELECTRIC INDUSTRIAL CO.,
LTD.**
**1-2, Shimohozumi 1-chome Ibaraki-shi
Osaka 567 (JP)**

(72) Inventor: **Konishi, Toshiharu Nitto Electric Ind.
Co Ltd**
**1-2 Shimohozumi 1-chome
Ibaraki-shi Osaka (JP)**
Inventor: **Shimomura, Takefumi Nitto Electric
Ind. Co Ltd**
**1-2 Shimohozumi 1-chome
Ibaraki-shi Osaka (JP)**
Inventor: **Kobayashi, Yoshiki Nitto Electric Ind.
Co Ltd**
**1-2 Shimohozumi 1-chome
Ibaraki-shi Osaka (JP)**
Inventor: **Shimizu, Yukio Nitto Electric Ind. Co
Ltd**
**1-2 Shimohozumi 1-chome
Ibaraki-shi Osaka (JP)**

(74) Representative: **Diamond, Bryan Clive et al
Gee & Co. Chancery House Chancery Lane
London WC2A 1QU (GB)**

Courier Press, Leamington Spa, England.

## Description

The present invention relates to a composition for bonding metal powders which is used to obtain molded metal powder sheets for shaped articles. More particularly, it relates to such composition which can be used in a small amount based on the metal powder and can form flexible metal powder moldings which are capable of tolerating deformation and which moldings can be converted by sintering into a metal layer having a high density.

In order to give special properties, such as wear resistance or corrosion resistance, to the surface of a metal substrate or base material, it is well known to form on the surface of the material a metal layer having these properties.

Customarily, the metal coating is formed as a layer on the base material by applying a mixture of a metal powder, a binder, a plasticizer and a solvent to the metal base material and after evaporation of the solvent sintering the assembly, whereby the sintered flexible metal coating layer is metallurgically bonded to the base material. Less usually a metal sheet is prepared by sintering the same metal powder molding mixture as described above, and the sheet is bonded to the metal base material by a physical means such as screws or an adhesive, to form the metal covering.

In either case, it is necessary that the metal powder molding has good flexibility so that it can be transformed so as to fit on or against a curved surface face of a base material without suffering serious defects such as generation of cracks; and this kind of metal powder molding must also have sufficient strength for it to be handled. Moreover, the metal powder molding must be able to form a coating layer having a high density without suffering contraction or cavities during sintering.

For this kind of molding, compositions comprising resin binders such as polyvinyl ether or methyl cellulose as a main component, to which a volatile plasticizer such as dibutyl phthalate, glycerine or wax, is added to improve the flexibility of the moldings, have been described in, for example, published unexamined Japanese Patent Applications (OPI) Nos. 91910/74 and 35703/81 and Japanese Patent Publication No. 21167/70. However, such plasticizers rapidly volatilize in the sintering process, because they have generally a low boiling point as compared with the main component. Therefore, they generate gas in an early stage of the sintering process and this may cause numerous openings on the coating layer after sintering. Accordingly, it is necessary to keep the rate of increase in temperature during sintering as slow as possible.

Moreover, the use of plasticizers reduces the strength of the moldings formed, tends to form cracks during handling, and makes it difficult to obtain a layer which after sintering has a high density.

Accordingly, one object of the present invention is to provide a composition for bonding metal powders which is usable to obtain metal powder moldings useful for being metallurgically or physically bonded to a metal base material, and which can have good flexibility and good strength or elongations and can form a metal layer having a high density after sintering, without using plasticizers and, consequently, without the above described problems.

The composition for bonding metal powders according to the present invention is used in an amount of at most about 7 parts by weight as the solids content based on 100 parts by weight of a metal powder for obtaining a flexible metal powder molding which is capable of tolerating deformation at a radius of curvature of up to 15 millimeters; and the composition comprises as main component an acrylic homo- or copolymer having a weight average molecular weight of about 50,000 to 1,500,000 which comprises an alkyl (meth)acrylate monomer having an average number of carbon atoms of 3 to 12 in the alkyl moiety, optionally admixed with a resin as specified below which gives adhesive property to said polymer, this main component having a glass transition temperature in a range of −70 to −10°C and an elastic modulus in the range of 0.05 to 50 kg/cm$^2$ at a temperature of 25°C.

The main component composition, namely the specific acrylic polymer or a mixture thereof with an adhesion-imparting resin, makes it possible to produce a metal molding having excellent flexibility which is deformable so as to fit well on a surface of a metal base material having a radius of curvature of up to 15 mm without cracking, or which is formable separately from the base material, into a suitable curved shape having the same radius of curvature as up to 15 mm, even if the solid content of the composition to the metal powder is as low as 7 parts/100 as described above, in substantial absence of a plasticizer.

Further, this metal powder molding has excellent strength and elongation characteristics and forms a layer having a high density after sintering, because the amount of the composition used is small and plasticizer is not used. Therefore, the metal powder molding has excellent performance as a coating layer on the surface of the metal base material.

The acrylic polymer used in the present invention is one which is prepared by polymerizing or copolymerizing one or more alkyl (meth)acrylates having an average carbon atom number of 3 to 12 in the alkyl moiety as sole or main monomers.

This polymer reduces the amount of gas generated when sintered by heat treatment at high temperature, thereby preventing consequent generation of swelling, in the metal layer. If the average carbon atom number in the alkyl moiety is below 3 or beyond 12 there are problems in that the adhesion bonding property becomes poor and flexibility is lacking.

Examples of the main monomers are esters of acrylic acid or methacrylic acid wherein the alkyl group of aliphatic alcohols is a methyl, ethyl, butyl, isobutyl, hexyl, heptyl, octyl, isooctyl or 2-ethylhexyl group.

The acrylic polymer may be a copolymer with a polymerizable monomer having a functional group in the molecule and which improves adhesive strength of the composition at room temperature. The amount of any copolymerizable monomer used is about 80 to 99.5% by weight, preferably 90 to 98% by weight, of the main monomer and about 20 to 0.5 by weight, preferably 10 to 2% by weight, based on the weight of the monomer, so that polymers having flexibility and a tensile strength of about 350 to 2,000 g/20 mm (drawing rate: 300 mm/minute, at 20°C and 60% relative humidity are obtained. If the amount of the comonomer is small, the above-described effects are poor; if its amount is too large, there is the possibility of generating swelling in the metal layer after sintering.

Examples of such polymerizable monomers include α-mono- or diolefin carboxylic acids such as (meth)acrylic acid, crotonic acid, maleic acid, itaconic acid, phenolic acid or fumaric acid, which have a carboxyl group as the functional group; 2 - hydroxyethyl methacrylate, 2 - hydroxypropyl (meth)acrylate, 1 - methyl - 2 - hydroxyethyl (meth)acrylate or 2 - hydroxyvinyl ether, which have a hydroxyl group as the functional group; glycidyl (meth)acrylate which has an epoxy group as the functional group; N-methylol (meth)acrylamide which has a methylol group as the functional group; and N-n - dimethylaminoethyl (meth)acrylate, N-tertiary butylaminoethyl (meth-acrylate or N-tertiary butylaminobutyl (meth)acrylate, which have an amino group as the functional group. Of these, α-mono- or diolefin carboxylic acids are particularly preferred in that they form a complex with the metal powder and the resultant mixture can form a flexible sheet having a tensile strength of about 700 to 2,000 g/20 mm.

The acrylic polymer must have a weight average molecular weight of 50,000 to 1,500,000, preferably 300,000 to 1,200,000. If the weight average molecular weight is less than about 50,000, its bonding force to metal powder is inadequate, causing deterioration of strength of the moldings or making it difficult to obtain high density after sintering. If the weight average molecular weight is more than about 1,500,000, working properties in obtaining the molding is poor.

The above described acrylic polymer is used alone or together with a resin which gives adhesive property, mainly by improvement of adhesive force of the molding at room temperature. The amount of the resin is preferably 50 to 99.8% by weight of the acrylic polymer and 50 to 0.2% by weight of the resin. If the amount of the resin is too small, the above-described effect cannot be obtained, and if the amount is too large, the above-described characteristics of the acrylic polymer are damaged.

Examples of such resins which give adhesive property are an alkylphenol resin, coumarone-indene resin, polyterpene resin, rosin resin, petroleum resin, polyvinyl ether, terpene phenol resin, xylene resin, epoxy resin, polyester resin, polyimide or polyamide.

The main component (acrylic polymer alone or with resin which give adhesive property) must have a glass transition temperature in said range of −70 to −10°C, preferably −65 to −30°C. A polymer main component having a glass transition temperature of less than about −70°C is not readily economically available and has a problem that sufficient strength cannot be obtained because it is too soft. On the other hand, if this glass transition temperature is higher than about −10°C a flexible molding which is capable of tolerating deformation at a radius of curvature of about 15 mm cannot be obtained.

Said main component in the composition must also have an elastic modulus in a range of 0.05 to 50 kg/cm$^2$, at 25°C. If the elastic modulus is below about 0.05 kg/cm$^2$, the molding easily suffers defects such as cracks when it is handled or transformed due to the lack of strength or elongation (10 to 180%) and, consequently, a metal layer having high density cannot be obtained by sintering, because a large amount of the composition must be used for molding. On the other hand, if the elastic modulus is above about 50 kg/cm$^2$, it becomes difficult to obtain a flexible molding which is capable of tolerating said deformation.

The term "elastic modulus" means the value of the tangent modulus when a sample is drawn at a chuck distance of 50 mm at a rate of 300 mm/minute at a measuring temperature of 25°C. The calculation formula thereof is as follows.

$$\text{Elastic modulus} = F/S$$

wherein:
F: Force at a point of intersection of the point at which the sample is stretched by 100% and the tangent line (kg/cm$^2$); and
S: Sectional area of the sample.

If desired, the composition may also contain various additives such as an xyline resin, paraffin wax, process oil or abietyl alcohol as softening agents; or calcium carbonate, silica or talc as fillers. Further, if desired, anionic, cationic or nonionic surfactants can be added as a stabilizer during the passage of time, in an amount of about 0.01 to 5 parts by weight per 100 parts by weight of the main component; the addition of surfactant effectively prevents softening of a molding during passage of time.

A process of obtaining a metal powder molding in the form of a sheet or a shaped article using the composition for bonding metal powders according to the present invention is now described.

The process comprises preparing a solution of the above-described composition with a suitable organic solvent (such as acetone, toluene or methyl ethyl ketone), adding the metal powder to the solution in such amount that the solids content of the composition is at most about 7 parts by weight, preferably 1.0 to 5.5 parts by weight, per 100 parts by weight of the metal powder, kneading the mixture, casting the mixture into a mold covered with a releasing paper, evaporating the solvent, and then molding to a sheet or other shape by passing through rolls. Press molding may be carried out by mixing without using the solvent if desired and necessary, with heating or in vacuum with heating.

In this process, if the solids content of the composition of the present invention were larger than about 7 parts per 100 parts by weight of the metal powder, it would be difficult to obtain a metal layer having a high density after sintering, and pollution of the sintering furnace would occur by the resin components gasified during sintering processing.

The metal powder used can be of various kinds depending upon the properties to be given to the surface of the metal base material, such as self-melting alloy powder or wear-resisting alloy powder. Examples of wear-resisting alloy powders are multi-component eutectic alloy powders of composition Fe-M-C wherein M includes at least one of Mo, B and P as a major component and may contain Cr, V, W, Nb, Ta and Ti as secondary elements; it may further contain Si, Ni, Mn, etc as other elements. Such multi-component eutectic alloy powders have characteristics that the sintering temperature is comparatively low, the liquid phase is about 10 to 50% by weight in a temperature range of 1,000 to 1,150°C and the liquid phase has a good wetting property for the base material.

These alloy powders preferably have a particle size of 150 Tyler mesh or less; the particle size greatly affects the porosity after sintering. If the particle size is larger than the above-described value, it becomes difficult to form an alloy layer having a high density.

A metal powder molding formed by the above-described process is shaped into a sheet material having a thickness of 0.05—10 mm, preferably 0.3—5 mm, which shows a good flexibility which is capable of tolerating deformation at a radius of curvature of up to about 15 mm and has excellent strength and elongation.

To use this molding material, it can be adhered to the surface of a metal base material with or without using a suitable adhesive layer so as to fit it on the surface by deformation and, thereafter, the assembly is subjected to sintering processing under a suitable temperature condition according to the kind of metal powder. Alternatively, after the molding is transformed appropriately by processing and is subjected to sintering processing in the same manner as described above, the sintered product is mechanically bonded to the surface of the metal base material. Sintering processing is generally carried out with heating under a non-oxidizing atmosphere in order to prevent deterioration of the metal powder caused by oxidation.

The formed metal layer after sintering has a high density due to the use of the composition of the present invention, and inherent performances such as prevention of wear or corrosion, etc. of the surface of the metal base material can be well exhibited.

The metal powder moldings using the composition for bonding metal powders of the present invention can be applied as a surface modifying layer of the base material for tools, machines, electric elements and automobiles, while utilizing the above-described characteristics, and can be applied as raw materials for rods or pipes having a desired shape, sheets or shaped articles. Furthermore, the metal powder moldings can be utilized in an unsintered form as barrier materials, such as a material for shielding electromagnetic wave while utilizing characteristics thereof, such as tensile strength, elongation or flexibility.

The present invention is described in greater detail by reference to the following non-limiting examples, wherein parts are by weight.

### Example 1

| | |
|---|---|
| 2-Ethylhexyl acrylate | 92 parts |
| Ethyl acrylate | 5 parts |
| Acrylic acid | 3 parts |
| Toluene | 150 parts |
| Benzoyl peroxide | 0.3 part |

The above-described components were fed into a reactor. The resultant mixture was subjected to polymerization reaction at 65°C for 9 hours to obtain a solution containing an acrylic copolymer having a weight average molecular weight of 600,000. This solution was used as the composition for bonding metal powders of the present invention. The acrylic copolymer in the composition had a glass transition temperature of $-64°C$ and an elastic modulus of 0.6 $kg/cm^2$ at 25°C.

Then, 3 parts of the above-described composition were added to 100 parts of an iron alloy powder passing through a 250 mesh Tyler screen. The resulting mixture was kneaded by a wet process using acetone as a solvent and rolled using rolls to produce an alloy powder sheet having a thickness of 1.2 mm and a density of 4.8 $g/cm^3$ which was flexible and had a tensile strength of 1,100 g/20 mm.

### Example 2

| | |
|---|---|
| Butyl acrylate | 98 parts |
| Hydroxylethyl acrylate | 2 parts |
| Ethyl acetate | 100 parts |
| Benzyl peroxide | 0.2 part |

The above-described components were fed into a reactor. The mixture was subjected to polymerization reaction at 70°C for 9 hours to obtain a solution containing an acrylic copolymer having a weight average molecular weight of 45,000. To this solution, a phenol resin which gives adhesive property was added in an amount of 30 parts per 100 parts of the acrylic copolymer. The main component composed of the above-described acrylic copolymer and the resin which gave adhesive property had a glass transition temperature of −55°C and an elastic modulus of 0.4 kg/cm² at 25°C.

Then, 4 parts of the above-described composition were blended with 100 parts of an iron alloy powder passing through a 150 mesh screen, and the same procedure as in Example 1 was carried out to produce an alloy powder sheet having a thickness of 1.5 mm and a density of 4.5 g/cm³ which was flexible and had a tensile strength of 450 g/20 mm.

### Example 3

| Isooctyl acrylate | 60 parts |
|---|---|
| Isobutyl acrylate | 39 parts |
| Glycidyl methacrylate | 1 part |
| Toluene | 120 parts |
| Benzoyl peroxide | 0.2 part |

The above-described components were fed into a reactor. The mixture was subjected to polymerization reaction at 75°C for 8 hours to obtain a solution containing an acrylic copolymer having a weight average molecular weight of 600,000. This solution was used as the composition for bonding metal powders of the present invention. The acrylic copolymer in the composition had a glass transition temperature of −53°C and an elastic modulus of 2.0 kg/cm² at 25°C.

Then, 2 parts of the composition were blended with 100 parts of an iron alloy powder passing through a 350 mesh screen, and the same procedure as in Example 1 was carried out to obtain an alloy powder sheet having a thickness of 0.8 mm and a density of 4.4 g/cm³ which was flexible and had a tensile strength of 600 g/20 mm.

In order to examine performances of alloy powder sheets obtained in examples 1 to 3, each sheet was cut into a size of 1 cm×5 cm, and the following tests (1) and (2) were carried out.

(1) A cut sheet was wound on a steel pipe having a radius of 20 mm, and changes of the surface of the sheet were examined.

(2) After a cut sheet was wound on the same steel pipe as in (1) above, it was subjected to sintering processing and the state of the surface and density of the sheet after sintering were examined.

As a result of these tests, generation of cracks and swellings were not observed in the sheets of Examples 1 to 3 in both tests (1) and (2). In addition, it was found that, in each sheet of Examples 1 to 3, an alloy layer having a high density of 7.2 or more could be formed by carrying out the sintering processing of the test (2).

### Claims

1. A composition for bonding metal powder which is used in an amount of at most 7 parts by weight as solids content per 100 parts by weight of a metal powder so as to obtain a flexible metal powder molding which is capable of tolerating deformation at a radius of curvature of up to 15 mm, the composition comprising (a) an acrylic homo- or co-polymer having a weight average molecular weight of 50,000 to 1,500,000 which comprises an alkyl acrylate or methacrylate having an average carbon atom number of 3 to 12 in the alkyl moiety, or (b) a mixture of said polymer and a resin which gives adhesive property to said polymer, said resin being an alkylphenol resin, coumarone-indene resin, polyterpene resin, rosin resin, petroleum resin, polyvinyl ether resin, terpene phenol resin, xylene resin, epoxy resin, polyester resin, a polyimide or polyamide, said polymer or mixture having a glass transition temperature in the range of −70 to −10°C and an elastic modulus in the range of 0.05 to 50 kg/cm² at a temperature of 25°C.

2. A composition as claimed in Claim 1, wherein said acrylic polymer is a copolymer and comprises by weight 80 to 99.5% of said alkyl (meth)acrylate and 20 to 0.5% of a polymerizable monomer having a carboxyl, hydroxyl, methylol or amino functional group in the molecule.

3. A composition as claimed in Claim 2, wherein the polymerizable monomer having a functional group in the molecule is an α-mono-diolefin carboxylic acid.

4. A composition as claimed in Claim 1, 2 or 3, which contains as said mixture (b) 50 to 99.8% by weight of the acrylic polymer and 50 to 0.2% by weight of the resin which gives adhesive property.

5. A composition as claimed in any preceding claim, wherein the acrylic polymer has a weight average molecular weight of 300,000 to 1,200,000.

6. A composition as claimed in any preceding claim, wherein the polymer or mixture (a) or (b) has a glass transition temperature of −65 to −30°C.

7. A composition as claimed in any preceding claim, wherein the polymer or mixture (a) or (b) has an elastic modulus of 0.2 to 30 kg/cm².

8. A composition as claimed in any preceding claim, which also contains an anionic, cationic or nonionic surfactant in an amount of 0.01 to 5 parts by weight per 100 parts by weight of the main component.

9. A process of obtaining a metal powder molding which comprises preparing a solution in an organic solvent of a composition as claimed in any preceding claim and a powdered metal, kneading it into a mold, evaporating the solvent, and rolling it into shape.

### Patentansprüche

1. Zusammensetzung zum Binden von Metallpulver, die in einer Menge von höchstens 7 Gewichtsteilen, bezogen auf den Feststoffgehalt, pro 100 Gewichtsteile Metallpulver verwendet wird, um einen flexiblen Metallpulverformling zu erhalten, der in der Lage ist, eine Deformation bis zu einem Krümmungsradius von 15 mm zu ertragen, wobei die Zusammensetzung umfaßt

a) ein Acrylhomo- oder -copolymer mit einem gewichtsmittleren Molekulargewicht von 50 000 bis 1 500 000, umfassend ein Alkylacrylat oder -methacrylat mit einer durchschnittlichen Kohlenstoffatomanzahl von 3 bis 12 im Alkylteil oder

b) eine Mischung aus dem Polymer und einem Harz, das dem Polymer Klebevermögen verleiht, wobei das Harz ein Alkylphenolharz, Cumaron-Inden-Harz, Polyterpenharz, Colophoniumharz, Erdölharz, Polyvinyletherharz, Terpenphenolharz, Xylolharz, Epoxyharz, Polyesterharz, ein Polyimid oder Polyamid ist,

wobei das Polymer oder die Mischung eine Glasübergangstemperatur im Bereich von −70 bis −10°C und einen Elastizitätsmodul im Bereich von 0,05 bis 50 kg/cm$^2$ bei einer Temperatur von 25°C besitzt.

2. Zusammensetzung nach Anspruch 1, wobei das Acrylpolymer ein Copolymer ist und 80 bis 99,5 Gew.-% des Alkyl(meth)acrylats und 20 bis 0,5 Gew.-% eines polymerisierbaren Monomeren mit einer Carboxyl, Hydroxyl-, Methylol- oder Aminofunktionsgruppe im Molekül umfaßt.

3. Zusammensetzung nach Anspruch 2, wobei das polymerisierbare Monomer mit einer funktionellen Gruppe im Molekül eine α-Mono-diolefin-carbonsäure ist.

4. Zusammensetzung nach Anspruch 1, 2 oder 3, die als Mischung (b) 50 bis 99,8 Gew.-% des Acrylpolymeren und 50 bis 0,2 Gew.-% des Harzes, das Klebevermögen verleiht, enthält.

5. Zusammensetzung nach wenigstens einem der vorangehenden Ansprüche, wobei das Acrylpolymer ein gewichtsmittleres Molekulargewicht von 300 000 bis 1 200 000 besitzt.

6. Zusammensetzung nach wenigstens einem der vorangehenden Ansprüche, wobei das Polymer oder die Mischung (a) oder (b) eine Glasübergangstemperatur von −65 bis −30°C besitzt.

7. Zusammensetzung nach wenigstens einer der vorangehenden Ansprüche, wobei das Polymer oder die Mischung (a) oder (b) einen Elastizitätsmodul von 0,2 bis 30 kg/cm$^2$ besitzt.

8. Zusammensetzung nach wenigstens einem der vorangehenden Ansprüche, die ebenso ein anionisches, kationisches oder nichtionisches oberflächenaktives Mittel in einer Menge von 0,01 bis 5 Gewichtsteilen pro 100 Gewichtsteile der Hauptkomponente enthält.

9. Verfahren zum Gewinnen eines Metallpulverformlings, umfassend die Herstellung einer Lösung in einem organischen Lösungsmittel einer Zusammensetzung nach mindestens einem der vorangehenden Ansprüche und eines pulverförmigen Metalls, das Kneten dieser in eine Form, das Verdampfen des Lösungsmittels und das Formauswalzen.

**Revendications**

1. Une composition pour lier une poudre métallique qui est utilisée en quantité de 7 parties en poids au plus, calculée en solides, par 100 parties en poids d'une poudre métallique de manière à obtenir un moulage de poudre métallique flexible qui est capable de tolérer une déformation à un rayon de courbure allant jusqu'à 15 mm, la composition comprenant (a) un homo- ou copolymère acrylique ayant un poids moléculaire moyen en poids de 50 000 à 1 500 000 qui comprend un acrylate ou méthacrylate d'alkyle ayant un nombre moyen d'atomes de carbone de 3 à 12 dans le reste alkyle, ou (b) un mélange dudit polymère et d'une résine qui donne des propriétés d'adhérence audit polymère, ladite résine étant une résine d'alkylphénol, une résine coumarone indène, une résine de polyterpène, une résine de colophane, une résine de pétrole, une résine d'éther polyvinylique, une résine terpène-phénol, une résine de xylène, une résine époxydique, une résine de polyester, un polyimide ou un polyamide, ledit polymère ou mélange ayant une température de transition vitreuse dans la gamme de −70 à −10°C et un module élastique dans la gamme de 0,05 à 50 kg/cm$^2$ à une température de 25°C.

2. Une composition selon la revendication 1, dans laquelle ledit polymère acrylique est un copolymère et comprend 80 à 99,5% en poids dudit (méth)acrylate d'alkyle et 20 à 0,5% en poids d'un monomère polymérisable ayant dans sa molécule un groupe fonctionnel carboxyle, hydroxyle, méthylol ou amino.

3. Une composition selon la revendication 2, dans laquelle le monomère polymérisable ayant dans sa molécule un groupe fonctionnel est un acide α-mono-dioléfine-carboxylique.

4. Une composition selon la revendication 1, 2 ou 3, qui contient comme mélange (b) 50 à 99,8% en poids du polymère acrylique et 50 à 0,2% en poids de la résine qui donne des propriétés d'adhérence.

5. Une composition selon l'une quelconque des revendications précédentes, dans laquelle le polymère acrylique a un poids moléculaire moyen en poids de 300 000 à 1 200 000.

6. Une composition selon l'une quelconque des revendications précédentes, dans laquelle le polymère ou mélange (a) ou (b) a une température de transition vitreuse de −65 à −30°C.

7. Une composition selon l'une quelconque des revendications précédentes, dans laquelle le polymère ou mélange (a) ou (b) a un module élastique de 0,2 à 30 kg/cm$^2$.

8. Une composition selon l'une quelconque des revendications précédentes, qui contient également un tensioactif anionique, cationique ou non ionique en quantité de 0,01 à 5 parties en poids pour 100 parties en poids du constituant principal.

9. Un procédé pour obtenir un moulage de poudre métallique qui consiste à préparer une solution dans un solvant organique d'une composition selon l'une quelconque des revendications précédentes et d'un métal en poudre, à malaxer dans un moule, à évaporer le solvant et à mettre en forme par laminage.